Europäisches Patentamt

European Patent Office

Office européen des brevets

(11) Publication number: **0 493 806 A2**

# EUROPEAN PATENT APPLICATION

(21) Application number: **91122293.3**

(22) Date of filing: **27.12.91**

(51) Int. Cl.5: **G01N 15/02**

(30) Priority: **30.12.90 JP 416960/90**

(43) Date of publication of application:
**08.07.92 Bulletin 92/28**

(84) Designated Contracting States:
**DE FR GB**

(71) Applicant: **HORIBA, LTD.**
**2 Miyanohigashi-machi Kissyoin**
**Minami-ku Kyoto(JP)**

(72) Inventor: **Igushi, Tatsuo**
**Ayanokoji-dori, Inokuma Higashi**
**Shimogyo-ku, Kyoto(JP)**
Inventor: **Togawa, Yoshiaki**
**15-1-302, Asahi-cho, Katsura**
**Nishikyo-ku, Kyoto(JP)**

(74) Representative: **TER MEER - MÜLLER -**
**STEINMEISTER & PARTNER**
**Mauerkircherstrasse 45**
**W-8000 München 80(DE)**

(54) **Particle size distribution-measuring apparatus.**

(57) The particle size distribution-measuring apparatus comprises a laser beam irradiating arrangement (12) with a beam expander (14) for irradiating a sample cell (11) in which a medium with dispersed sample particles is housed. The apparatus comprises a ring-shaped detector (15) with a plurality of individual first photosensors (15a, 15b, ...) and a group (19) of second photosensors (19a, 19b, ...) arranged around said sample cell (11) such that a wide range of scattering angles of laser beams diffracted or scattered by said sample particles in dependence of their respective size can be reliably detected and sequentially and infividually processed on the basis of the theory of Fraunhofer diffraction or Mie scattering. The specific advantage of the invention is that an accurate measurement can be achieved over a wide range of particle sizes without modifying or exchanging an optical system.

Fig.1

The present invention relates to a particle size distribution-measuring apparatus for measuring a particle size distribution of sample particles utilizing a diffracting phenomenon or a scattering phenomenon generated by irradiating dispersed particles by means of beams.

In a particle size distribution-measuring apparatus utilizing the diffracting phenomenon or the scattering phenomenon of beams by particles, an intensity distribution of diffracted beams or scattered beams, in other words a relation between diffracted angles or scattered angles and an optical intensity, is measured and the measured relation is processed on the basis of the theory of Fraunhofer diffraction or Mie scattering to calculate a particle size distribution of sample articles.

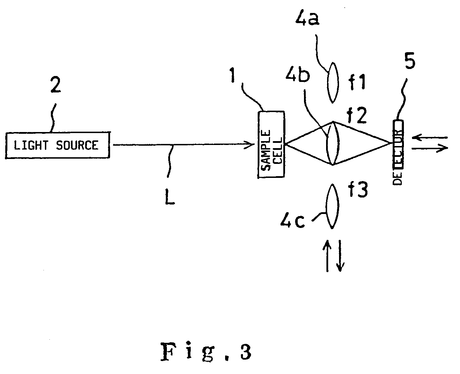

Fig. 3 of the accompanying drawing shows in a schematic presentation an optical measuring system of a conventional particle size distribution-measuring apparatus. A sample cell 1 is a transparent container in which a medium with dispersed sample particles is comprised, and said sample cell 1 is irradiated with parallel laser beams L from an optical system composed of a laser light source 2 or the like. The laser beams L are diffracted or scattered by the sample particles within the sample cell 1 and impinge thereafter on a ring-shaped detector 5 after having passed one of a plurality of collecting lenses 4a, 4b, 4c, ... which may be selected alternatively. The particle size distribution of said sample particles is determined from the measured optical intensity distribution.

With the above described known apparatus, in order to focus the diffracted or scattered laser beams L into an image on said ring-shaped detector 5, the plurality of collecting lenses 4a, 4b, 4c, ... have to be prepared with different focal distances for the measurement of sample particles having small particle diameters depending on the increasing scattering angles. Also the ring-shaped detector 5 has to be shifted to a position close to the collecting lens, for example the collecting lens 4a according to the specific demands, when the collecting lens 4a having a shorter focal distance f1 has to be used in exchange of another lens. On the contrary, when measuring sample particles of larger particle diameters producing reduced scattering angles, the ring-shaped detector 5 has to be shifted to a position further away from, for example, the collecting lens 4c that has to be brought into position and having a longer focal distance f3.

By using a plurality of collecting lenses 4a, 4b, 4c, ..., a corresponding number of focal distances is exchangeably available such that a particle size distribution can be measured over a wide range of particles sizes.

However, the conventional particle size distribution-measuring apparatus briefly described in connection with Fig. 3, requires the exchangeable use of the respective collecting lenses 4a, 4b, 4c for every range of particle sizes to be measured. Also the ring-shaped detector 5 has to be shifted in an adapted position according to the demands of an individual range of particle sizes to be measured. Accordingly, the optical system has to be exchanged for every range of particle sizes so that if a larger variety of ranges of particle sizes has to be measured, a rather frequent modification of the optical system is required. Apart from the fact that this readjustment procedure is time consuming, the fact is also that the results as far as the correct particle size distribution is concerned, is not reliable. This is also a result of the fact that the optical system can be precise only for one particle size or a relatively narrow range thereof. Since sample particles to be measured may cover a large range of particle sizes, the requirement to exchange the optical system for every sample is a rather troublesome problem.

It is an object of the present invention to provide a particle size distribution-measuring apparatus capable of accurate measuring of a wide range of particle size distributions in a simple way without exchanging an optical system.

In order to achieve this object, a particle size distribution-measuring apparatus comprising a laser beam source for irradiating a sample cell with an appointed wave length in which a medium with dispersed sample particles is housed, and having a ring-shaped detector for measuring the optical intensity of said laser beams diffracted or scattered by said sample particles, according to the invention, is characterized in that

- said ring-shaped detector is composed of a plurality of first photosensors for measuring the optical intensity at respective scattering angles of said laser beams diffracted or scattered by said sample particles in said sample cell,
- a group of second photosensors for measuring the optical intensity of the laser beams at respective and specific larger scattering angles of said laser beams diffracted or scattered by said sample particles in said sample cell,
- data inputting means are provided for collecting data from said plurality of first photosensors of said ring-shaped detector as data for a small particle size range and measuring data from said group of second photosensors as data for larger particle size ranges, and in that
- a particle size distribution calculating means is provided for calculating the particle size distribution over a wide range of particle sizes from the input data of said plurality of first photosensors and from said group of second photosensors, respectively, without modifying the optical system.

According to a preferred embodiment, the plurality of groups of input data are read-in via a multiplexer into an A/D converter which supplies said data in a defined time sequence into an operation and calculating device.

According to another preferred modification and improvement, the ring-shaped detector is composed of a plurality of cocentric photosensors.

The invention and advantageous embodiments and details thereof are described in the following, however, without an intention to limit the scope of the protected invention, with reference to the accompanying drawings, in which

Fig. 1 is a schematic arrangement diagram outlining a particle size distribution-measuring apparatus according to a preferred embodiment of the present invention;

Fig. 2 is a schematic perspective view showing a ring-shaped detector in a particle size distribution-measuring apparatus according to the invention; and

Fig. 3 is a schematic arrangement of the construction of a conventional particle size distribution-measuring apparatus as described above.

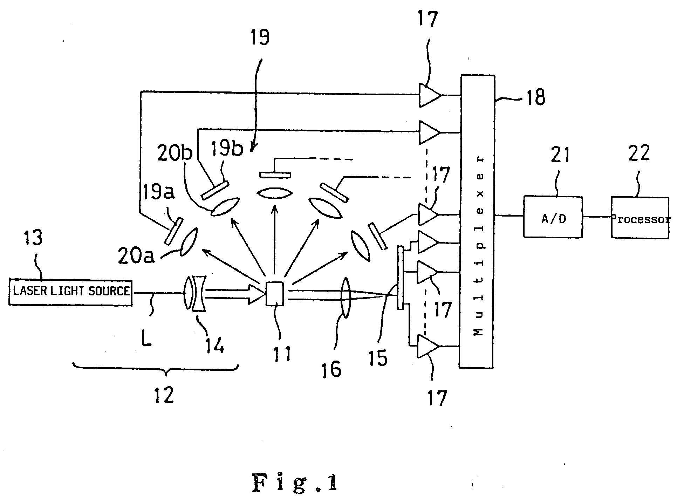

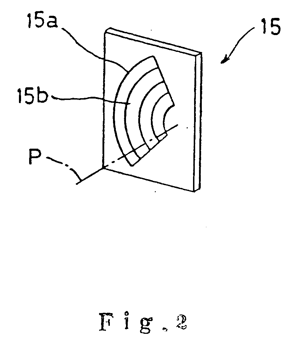

A preferred embodiment of the invention will be described with reference to Figs. 1 and 2 in the following.

Referring to Fig. 1, a sample cell 11 is a transparent container in which a sample liquid with dispersed sample particles in a medium is housed. A laser beam irradiating device 12 comprises an optical system with a laser light source 13 for irradiating a parallel laser beam L of an appointed wave length after expanding the flux thereof via a beam expander 14 into said sample cell 11.

A collector lens 16 for collecting the laser beam L diffracted or scattered by the sample particles in said cell 11 on a ring-shaped detector 15 is arranged on the optical axis of said laser beam-irradiating means 12 in front of and on the opposite side of said sample cell 11.

The ring-shaped detector 15 receives the laser beams L of relatively small scattering angles of the laser beam L diffracted or scattered by said sample particles at every of various scattering angles to specifically measure the optical intensity of said laser beams L for relatively small scattering angles.

Fig. 2 depicts the general construction of a ring-shaped detector 15 according to the invention. This detector 15 comprises a plurality of first photosensors 15a, 15b, ... preferably arranged in a cocentric arrangement of rings or ring segments for detecting the laser beams L diffracted or scattered with the respective angles depending on the particle size of the sample particles. The center of the cocentric ring arrangement of the plurality of first photosensors 15a, 15b, ... corresponds with the optical axis P.

As shown in Fig. 1, the respective first photosensors 15a, 15b, ... are connected with a multiplexer 18 via individual respective amplifiers 17.

The laser beam-irradiating means, the collecting lens 16 and the ring-shaped detector 15 form an optical system for detecting particles of relatively large diameters.

In addition to the ring-shaped detector 15, a plurality of second photosensors 19a, 19b, ..., designated as a group of photosensors 19, serves for individually detecting the beams of relatively large scattering angles of the laser beams L diffracted or scattered by the sample particles at various specific larger scattering angles. Those photosensors 19a, 19b, ... are arranged at defined positions of respective scattering angles around the sample cell 11. In particular, in the present case, the second photosensors 19a, 19b, ... are arranged not only in the rear of the sample cell 11 for specifically large scattering angles as shown, for example, for the photosensors 19a and 19b, but also in front of the sample cell 11 for smaller or medium scattering angles so that also the optical intensity of the laser beams L scattered in front of the sample cell 11 but outside of the ring-shaped detector 15, may be measured.

The above-described group of second photosensors 19a, 19b, ... receives the diffracted beams or the scattered beams via respectively arranged corresponding collecting lenses 20a, 20b, ... These second photosensors 19a, 19b, ... are also connected via respective amplifiers 17 to said multiplexer 18.

The laser beam-irradiating means 12, said group of second photosensors 19 and said respective collecting lenses 20 form an optical system for detecting particles of small particle diameters causing a larger angle of diffraction or scattering of said laser beams L.

The multiplexer 18 takes in the measured data from the respective first photosensors 15a, 15b, ... and the respective second photosensors 19a, 19b, ... in a defined sequence, converts the taken-in measured data into a signal series in the reading-in order and send said signal series to an A/D converter 21 who converts the analog data signal series into digital data supplied to an operating device or signal processor 22 in the following step. Said processor 22 carries out an operation for determining the particle size distribution of the sample particles in the sample cell on the basis of the digital data of the optical intensity. The operating function of said processor 22 consists in the determination of the particle size distribution on the basis of the theory of Fraunhofer diffraction or Mie scattering.

In the following, the measuring procedure for a particle size distribution by means of the above-described apparatus will be described.

The laser beam L from the laser light source 13 is flux-expanded by means of the beam expander 14 and impinges on the sample cell 11. The laser beams L are diffracted or scattered by the sample particles within said sample cell 11. Of the diffracted beams or the scattered beams, those having relatively small scattering angles are focussed to an image on the ring-shaped detector 15 by means of the collector lens 16. The optical intensity of the laser beams L diffracted or scattered by the sample particles is measured by the respective first photosensors 15a, 15b, ... arranged in the ring-shaped detector 15. Of the respective photosensors 15a, 15b, ..., the photosensor 15a (see Fig. 2) on an outer circumferential side receives the beams with larger scattering angles while the photosensors arranged closer to the optical axis P are irradiated by beams having smaller scattering angles. Accordingly, the optical intensity detected by a photosensor arranged further away from the optical axis P reflects a quantity of sample particles having smaller particle diameters, while the optical intensity detected by one or several of the photosensors on an inner circumferential part reflects a quantity of sample particles having larger particle diameters. The optical intensities detected by means of the respective first photosensors 15a, 15b, ... are converted into analog electrical signals and further supplied to said multiplexer 18 via the respective amplifiers 17.

On the other hand, laser beams L diffracted or scattered by sample particles with relatively large scattering angles which could not be collected by the collector lens 16 are collected through the individual collector lenses 20a, 20b, ... onto the respective corresponding second photosensors 19a, 19b, ..., and their optical intensity distribution is measured by the said group of second photosensors 19. Out of the group of second photosensors 19, those arranged closer to the rear of the sample cell 11 receive laser beams of large scattering angles while those second photosensors arranged closer to the front of the sample cell 11 receive the laser beams L with relatively smaller scattering angles. Accordingly, the optical intensity detected by the second photosensors arranged in the rear of the sample cell 11 reflects the quantity of sample particles of various small particle diameters while the optical intensity detected by the second photosensors arranged in front of the sample cell 11 reflects the quantity of sample particles having relatively larger particle diameters. The optical intensity detected by the respective second photosensors 19a, 19b, ... are converted into analog electric signals and are supplied via said amplifiers 17 to said multiplexer 18.

The analog electric signals supplied by the respective first photosensors 15a, 15b, ... and the second photosensors 19a, 19b, ... are taken-in by the multiplexer 18 in an appointed order or sequence, preferably in the order from the second photosensors 19a, 19b, ... corresponding to sample particles of small particle diameters to the first photosensors 15a, 15b, ... corresponding to sample particles of relatively larger particle diameters.

The analog electric signals supplied to the multiplexer 18 are transformed into series signals, are then converted into digital signals via the A/D converter 21 and are then read into the processor 22. The processor 22 determines the particle size distribution of the sample particles on the basis of the optical intensity measured by the ring-shaped detector 15 and the group of second photosensors 19 for every scattering angle. As already mentioned, the algorithm used in the processor 22 is based on the theory of Fraunhofer diffraction or Mie scattering.

The present invention has the considerable advantage that a particle size distribution can be accurately measured over a very wide range of particle size distribution with a single measuring stroke without modifying or exchanging the optical system.

**Claims**

1. A particle size distribution-measuring apparatus comprising a laser beam source (13) for irradiating with laser beams of a specific wave length a sample cell (11) in which a medium with dispersed sample particles is housed, and a ring-shaped detector (15) for measuring the optical intensity of said laser beams as diffracted or scattered by said sample particles according to the respective particle size, **characterized in that**

   - said ring-shaped detector (15) is composed of a plurality of first photosensors (15a, 15b, ...) for measuring the optical intensity at respectively associated scattering angles of said laser beams having small scattering angles of the laser beams (L) diffracted or scattered by said sample particles;

   - a group (19) of second photosensors (19a, 19b, ...) for measuring the optical intensity at respectively associated larger scattering angles of the laser beams (L) diffracted or scattered by said sample particles;

- data inputting means for taking-in the data measured by said ring-shaped detector (15) as data for a range of relatively small particle size diameters and data measured by said group (19) of second photosensors (19a, 19b, ...) as data for a range of relatively larger particle size diameters, and in that

- particle size distribution-calculating means (22) are provided for calculating the particle size distribution of the sample particles from the data input by said data inputting means on the basis of the theory of Fraunhofer diffraction or Mie scattering over a wide particle size range.

2. The particle size distribution-measuring apparatus according to claim 1, **characterized in that** each of said first photosensors (15a, 15b, ...) of said ring-shaped detector (15) and each of said group (19) of second photosensors (19a, 19b, ...) is connected to an associated input port of a multiplexer (18) via a respectively associated amplifier (17), and in that said input ports of said multiplexer (18) are time sequentially scanned in order to derive a group of series data corresponding to the intensity data detected by each of said photosensors (15a, 15b, ..., 19a, 19b, ...).

3. The particle size distribution-measuring apparatus according to claim 2, **characterized in that** said data series from said multiplexer (18) is A/D converted and time-sequentially supplied to a processor (22) generating a particle size range distribution scale by use of an algorithm on the basis of the theory of the Fraunhofer diffraction or Mie scattering.

4. The particle size distribution-measuring apparatus according to claim 1, **characterized by** a laser beam irradiating means (12) comprising said laser light source (13) and a beam expander (14) for expanding the laser light beam (L) before irradiating said sample cell (11).

Fig.1

Fig. 2

Fig.3